# EUROPEAN PATENT APPLICATION

(11) **EP 4 620 791 A1**
(43) Date of publication of application: **24.09.2025**
(21) Application number: 23903038.0
(22) Date of filing: 30.08.2023
(51) Int. Cl.: B62D 33/06, B62D 25/08

(54) **TRUCK HIGH ROOF STRUCTURE**

(30) Priority: 16.12.2022 JP 2022201395
(71) Applicant: Daimler Truck AG, 70771 Leinfelden-Echterdingen (DE)
(72) Inventor: NAKAZATO, Jun, Kawasaki-shi, Kanagawa 211-8522 (JP); TAKARADA, Atsushi, Kawasaki-shi, Kanagawa 211-8522 (JP); IGUCHI, Taishi, Kawasaki-shi, Kanagawa 211-8522 (JP); SURENDRAN, Karthik Syamala, Bengaluru 560066 (IN); SUBRAMANIAM, Murugan, Bengaluru 560066 (IN)
(74) Representative: Hofstetter, Schurack & Partner
(86) International application number: PCT/JP2023/031403
(87) International publication number: WO 2024/127734

(57) **Abstract**

A high-roof structure of a truck in which a roof panel of a high-roof type is mounted on a cab body is disclosed. The roof panel includes a main portion forming a ceiling and side face portions having corners that downward curve from the main portion. The roof panel is supported by a roof frame from a side of a vehicle interior. The roof frame includes a main frame 3 and sub-frames 4. The main frame 3 includes a width directional portion 31 along the main portion, and vertical portions 35 having curved portions 33 that downward curve from the width directional portion at a curvature smaller than a curvature of the corners and that is separated from the corners. The main frame 3 has lower ends attached to the cab body. The sub-frames 4 are disposed between the main frame 3 and the roof panel and downward curving from vicinities of connecting portions between the main body and the side face portions. The sub-frames 4 include curved portions 41 along shapes of the corners. First ends of the sub-frames 4 are joined to the main frame 3 in the vicinities of the connecting portions and second ends of the sub-frames 4 are attached to the cab body 5.

## Description

### [Technical Field]

The present invention relates to a truck high roof structure (a high-roof structure of a truck) in which a roof panel of a high-roof type is mounted on a cab body.

### [Background Art]

In order to expand the vehicle interior formed in the cab, a large truck of some type adopts a high-roof structure that provides a roof panel at a position higher than that of normal. Such a high-roof structure is mounted above a cab body having an opened ceiling (see Patent Literatures 1 and 2).

### [Citation List]

### [Patent Literature]

[Patent Literature 1] JP2017-144884 A
[Patent Literature 2] JP2017-144967 A

### [Summary of Invention]

### [Technical Problem]

In a cab adopting a high-roof structure, a frame extending along a vehicle width direction is arranged on a roof panel on the side toward the inside of the vehicle interior to support the roof panel. This frame, which is generally formed of a thick plate, has difficulty in being shaped, and in particular, it is difficult to form the frame so as to follow the shapes of the corners on the left and right edges along the vehicle width direction of the roof panel.

Therefore, at the left and right corners of the roof panel, the curvature of the frame becomes smaller (the radius of curvature becomes larger) than that of the roof panel, which separates the frame downward from the roof panel. Consequently, when load is applied from above the roof panel, only the straight line portion at the center of the frame in the vehicle width direction can receive the load, so that the supporting structure becomes weak.

With the foregoing problems in view, one of the objects of the present invention is to provide a high-roof structure of a truck aiming at enhancing support stiffness of a frame by increasing portions of the frame that follow the shape of a roof panel at left and right corners of the roof panel of a high-roof type.

### [Solution to Problem]

The embodiment discussed herein is made to solve at least part of the above problem and is achieved in the following embodiments and application.
(1) A high-roof structure according to the present application is a high-roof structure of a truck in which a roof panel of a high-roof type is mounted on a cab body having a ceiling being opened, the high-roof structure being characterized in that the roof panel includes a main portion forming the ceiling and side face portions having corners that downward curve from the main portion to left and right sides of a vehicle, the roof panel being supported by a roof frame from an inside of a vehicle interior; the roof frame includes a main frame including a width directional portion extending linearly in a vehicle width direction along the main portion, and vertical portions having curved portions that downward curve from the width directional portion to the left and right sides of the vehicle at a curvature smaller than a curvature of the corners and that is separated from the corners, the vertical portion having lower ends attached to the cab body, and sub-frames being disposed between the vertical portions of the main frame and the side face portions of the roof panel and downward curving from vicinities of connecting portions between the main body and the side face portions to the left and right sides of the vehicle so as to extend toward the cab body; the sub-frames include curved portions formed along shapes of the corners of the roof panel; and first ends of the sub-frames are joined to the main frame in the vicinities of the connecting portions and second ends of the sub-frames are attached to the cab body.

Since the sub-frames, which are disposed between the main frame and the roof panel and which downward curve from the vicinity of connecting portions between the main body of the roof panel and the side face portions to the left and right sides of the vehicle so as to extend toward the cab body, are additionally arranged to the main frame, which extends from the main portion to the side face portion along the vehicle width direction, the sub-frames can increase the portions where the roof frame follows the shape of the roof panel. Consequently, the sub-frames enhance the supporting stiffness of the roof frame, and the durability against the input load into the roof panel from above is enhanced.

(2) It is preferable that the main frame is formed to have a hat-shaped cross section comprising a web, flanges, and arms, and the arms of the width directional portion overlap the roof panel and are joined to the roof panel.

By forming the cross-sectional shape of the main frame in a hat-shape as described above, the stiffness can be secured, and since the arms of the main frame overlap and are joined to the roof panel, a closed cross-sectional shape which further enhances the stiffness of the high-roof structure is formed.

(3) It is preferable that the sub-frames are each formed to have a hat-shaped cross section portion comprising a web, flanges, and arms, the main frame is contained in a recess portion defined by the web and the flanges of the hat-shaped cross section portion, and the sub-frame overlaps the main frame and is joined to the main frame at the first end.

The main frame is contained in the recess defined by the web and the flanges of a hat-shaped cross-section of each sub-frame and the sub-frame overlaps the main frame and is joined to the main frame at the first end. Accordingly, even if the sub-frame is added to the main frame, the protruding extent of the roof frame toward the vehicle interior can be suppressed as much as possible, and the size of the sub-frames can be increased to further enhance the stiffness of the high-roof structure. Further, since the double closed cross-sectional shapes are formed by the main frame and the sub-frame, the stiffness of the high-roof structure can be further enhanced.

(4) It is preferable that the flanges of each of the sub-frames are formed to be lower as approaching the first end, the web of the sub-frame is flush with the arms of the sub-frame at the first end, the sub-frame overlaps the main frame and the roof panel and is joined to the main frame and the roof panel at a portion where the web of the sub-frame is flush with the arm of the sub-frame.

By forming the main frame so as to be contained in the recess of each sub-frame and forming the sub-frame to overlap and be joined to the main frame and the roof panel at a portion where the web comes to be flush with the arms, the supporting stiffness of the roof frame can be enhanced.

(5) It is preferable that the sub-frames support the roof panel from the inside of the vehicle interior in the range closer to an outer side in the vehicle width direction than portions where the sub-frames overlap the main frame.

Consequently, the durability against the input load into the roof panel from above is enhanced.

### [Advantageous Effects of Invention]

According to the present embodiment, the sub-frames can increase portions of the roof frame which portions follow the shape of the roof panel and can enhance the supporting stiffness of the roof frame, so that the durability of the roof panel against load input from above is enhanced.

### [Brief Description of Drawings]

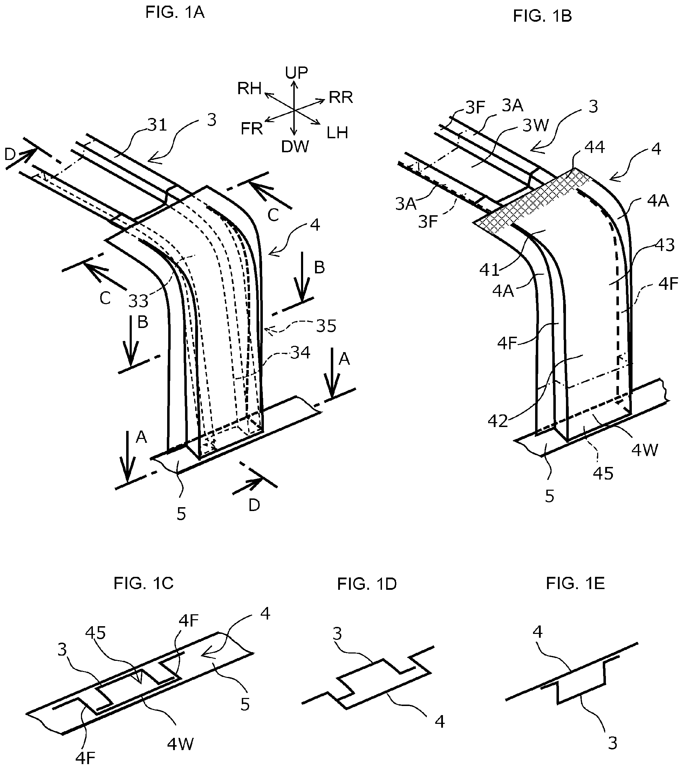

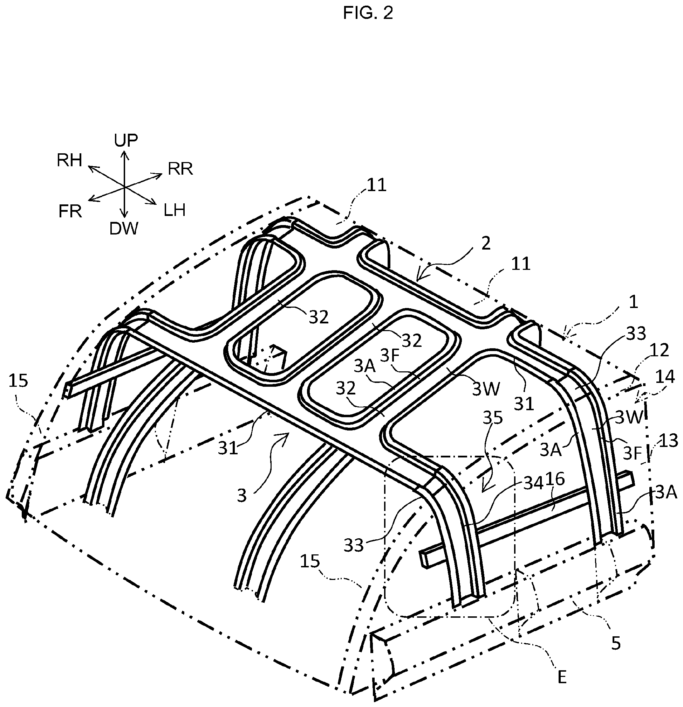

FIG. 1 is diagrams illustrating the main part of a roof frame for a high-roof truck vehicle according to an embodiment, FIGs. 1A and 1B being perspective views (corresponding to the E part of FIG. 2) of the main part viewed on the left side from the upper front, specifically FIG. 1A indicating all the hidden shapes with dashed lines, FIG. 1B omitting the hidden shape of the main frame, FIG. 1C being a transverse cross-sectional view in the direction of arrow A of FIG. 1A, FIG. 1D being a transverse cross-sectional view in the direction of arrow B of FIG. 1A, FIG. 1E being a vertical cross-sectional view in the direction of arrow C of FIG. 1A.
FIG. 2 is a perspective view of the main frame of the roof frame for the high-roof truck vehicle according to the embodiment viewed on the left side from the upper front.

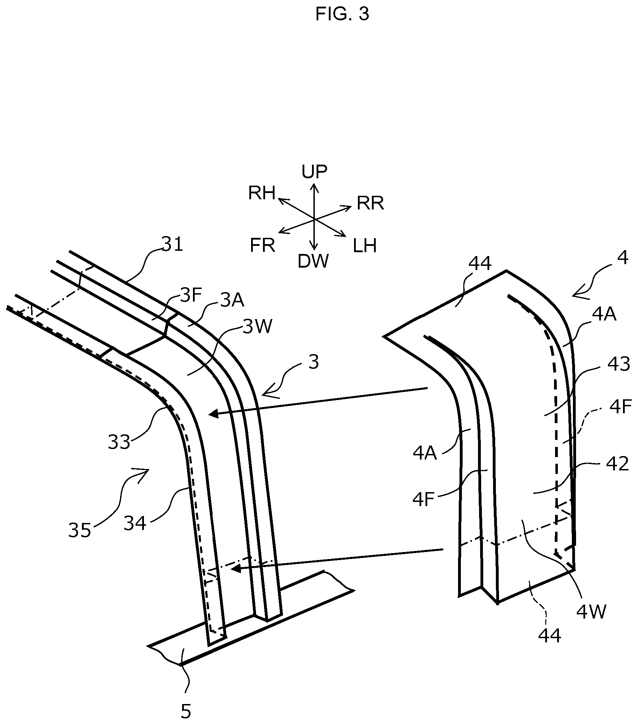

FIG. 3 is an exploded perspective view of the main part of the roof frame for the high-roof truck vehicle of FIG. 1 (FIG. 1A - FIG. 1E).
FIG. 4 is diagrams showing an advantageous effect of the roof frame for the high-roof truck vehicle of FIG. 1 (FIG. 1A - FIG. 1E), FIG. 4A being a longitudinal cross-sectional view (a vertical cross-sectional view in the direction of arrow D of FIG. 1A) cut along an extending direction of the main part of FIG. 1, FIG. 4B being a diagram omitting the sub-frame from FIG. 4A.

### [Description of Embodiments]

With reference to the drawings, an embodiment of the present invention will now be described. This embodiment is merely an example, and is not intended to exclude the application of various modifications and techniques not explicitly described in the following embodiment. Each configuration of the present embodiment can be variously modified and implemented without departing from the scope thereof. Furthermore, the configuration can be selected or omitted according to the requirement or appropriately combined.

### 1. Device Configuration

In the present embodiment, a high-roof structure of a truck is exemplified by a super-high roof structure of a large truck.

In the following explanation, a direction in which a vehicle moves forward is referred to as frontward FR, the opposite direction (the reverse direction of the vehicle) is referred to as rearward RR, and the left and right (left-hand LH and right-hand RH) are defined on the basis of a state where the vehicle directs frontward. The front-rear direction is also referred to as the vehicle longitudinal direction, and the left-right direction is also referred to as the vehicle width direction. Furthermore, a direction perpendicular to both the vehicle longitudinal direction and the vehicle width direction is referred to as an up-down direction (upward UP and downward DW). The vehicle shall be on a horizontal road surface and be in a posture in which the up-down direction matches the vertical direction (wherein the downward direction matches the direction of action of the gravity). In this posture, the vertical upward direction is referred to as the height direction.

The large truck according to the present embodiment is formed as a high-roof vehicle (hereinafter, referred to as a super-high-roof vehicle) that has a roof unit formed at a higher position than a roof formed in a vehicle (a so-called high roof vehicle) in which the roof unit is positioned higher than a general roof (also referred to as "normal roof"). Since the super-high-roof vehicle can reserve a high interior space inside a cab, occupancy in the vehicle interior is enhanced. In a large truck or the like, comfortability can be enhanced when a driver and the like rest or take a nap in the vehicle interior while traveling a long distance. However, the super-high-roof is also a kind of high-roof, and the super-high-roof vehicle shall be included in the high-roof vehicle.

FIG. 2 is a perspective view showing a roof frame 2 that supports a roof panel 1 of high-roof type mounted on a roof unit of a super-high-roof vehicle (high-roof vehicle) from the inside of a vehicle interior. FIG. 2 illustrates the roof panel 1 and a part of the frame member 5 with two-dot chain lines. The part of the frame member 5 is provided on an upper part of the cab body, and it supports the roof frame 2 and the roof panel 1.

As shown in FIG. 2, the roof panel 1 of the high-roof type is mounted above a cab body (not shown) with a ceiling being opened. The roof panel 1 includes a main portion 11 forming the ceiling, and side face portions 14. The side face portions 14 have corners 12 that downward curve from the main portion 11 to left and right sides of the vehicle and a side face portion body 13 linearly extending (on the plane, in a planar shape) in the vertical direction under the corners 12.

Furthermore, the main portion 11 and the side surface portion 14 are joined by welding (this joint portion is referred to as a "connecting portion 15"). The roof panel 1 is supported by the roof frame 2 on the side toward the inside of the vehicle interior (from the lower side in FIG. 2). The main portion 11 of the roof panel 1 is inclined slightly forward as a whole, and the forward inclination angle of the front portion gradually increases as approaching the front end portion thereof. The side face portion body 13 under the corner 12 of each side face portion 14 of the roof panel 1 is slightly inclined so as to be positioned slightly outward in the vehicle width direction as approaching the bottom thereof.

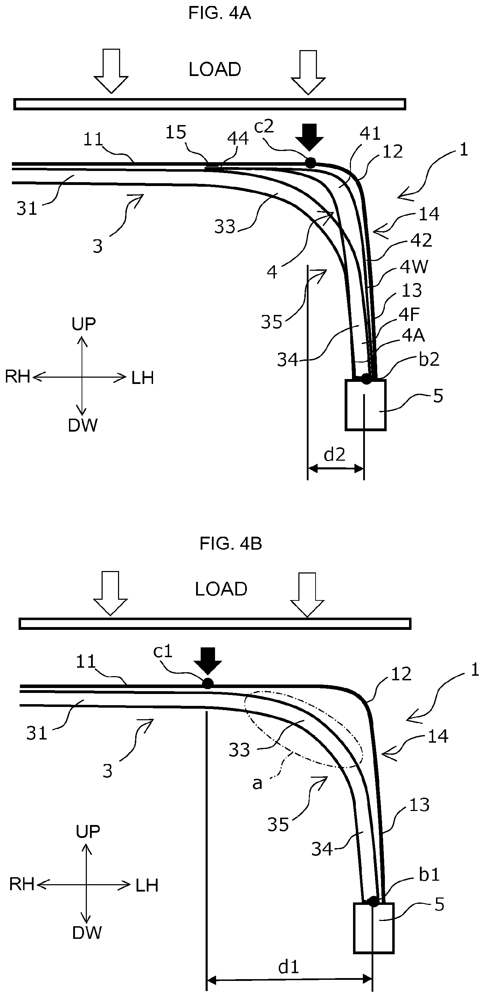

As illustrated in FIG. 1 (FIG. 1A - FIG. 1E), FIG. 2, and FIG. 4A showing the frame portion on the front left side, the roof frame 2 includes a main frame 3 and a sub-frame (also referred to as an outer frame) 4. The frame portion on the front right side is formed similarly.

The main frame 3 is arranged substantially horizontally along the main portion 11 of the roof panel 1 (however, the main frame 3 is inclined slightly forward as a whole, and the front end portion is sharply inclined). The main frame 3 includes two width directional portions 31 and three front-rear directional portions 32. The width directional portions 31 are extending in the vehicle width direction in parallel to each other. The front-rear directional portions 32 are intersecting with these width directional portions 31 and extending in the vehicle longitudinal (front-rear) direction of the vehicle in parallel to each other. These width directional portions 31 and front-rear directional portions 32 are integrally formed into a substantial lattice shape in plan view. The front-rear directional portions 32 are provided along the shape of the roof panel 1, and slightly inclined forward as a whole. The forward inclination angle gradually increases as approaching the front end portion thereof.

At the left and right end portions of the width directional portions 31, vertical portions 35 are provided which include curved portions 33 and vertical portion bodies 34. The curved portions 33 curves from the width directional portions 31 downward the vehicle left and right sides. The vertical portion bodies 34 extend linearly (on a plane, in a planar shape) in the vertical direction under the curved portions 33. The lower end of each vertical portion 35 is attached to the frame member 5 that is a part of the cab body and serves as the upper part of the cab body. In the present embodiment, as shown in FIG. 2, on the left and right of the main frame 3, stiffeners 16 that each connects vertical portion bodies 34 of the vertical portions 35 aligned in the longitudinal direction 16 to each other are attached to the corresponding vertical portion bodies 34 from the inside. However, the stiffeners 16 are not essential.

The curved portions 33 are curved to have a curvature smaller than the curvatures (i.e., larger curvature of radius) of corners 12 of the roof panel 1. This is because the main frame 3 requires high stiffness and therefore formed of a thick plate, so that the main frame 3 has difficulty in being formed to follow the large-curvature shapes of the corners 12.

Since a small curvature of the curved portion 33 shifts, as shown in FIG. 4A, the curved portion 33 inward in the vehicle width direction (toward the center in the vehicle width direction) more than the corner 12, the vertical portion body 34, which is positioned below the curved portion 33, has a larger inclination than that of the side face portion body 13. Consequently, the curved part 33 is separated inward in the vehicle width direction from the corner 12, and the most portion of the vertical portion body 34 is also separated inward in the vehicle width direction from the side face portion body 13.

The sub-frame 4 includes a curved portion 41 formed along the shape of the corner 12 of the roof panel 1 and a vertical portion 42 extending in a straight line (linearly, on a plane, in a planar shape) in the vertical direction under the curved portion 41. The sub-frame 4 has a first end (an end of the curved portion 41 inner side of in the vehicle width direction) joined to the main frame 3 at the connecting portion 15, and a second end (a lower end of the vertical portion 42) attached to the frame member 5 of the upper portion of the cab body.

As shown in FIG. 1, the main frame 3 is formed to have a cross section in a hat shape consisting of a web 3W, flanges 3F and arms 3A. The arms 3A of both the width directional portion 31 and the front-rear directional portion 32 overlap the roof panel 1 and are joined to the roof panel 1.

On the other hand, the sub-frame 4 has a hat-shaped cross section portion 43 formed to have a cross section in a hat-shape consisting of a web 4W, flanges 4F and arms 4A.

The flanges 4F of the hat-shaped cross section portion 43 of the sub-frame 4 come to be lower in height (a step height between the web 4W and the arms 4A) as approaching the first end (an end of the curved portion 41 inner side of in the vehicle width direction) of the sub-frame 4. At the first end, the flanges 4F cease and the hat-shaped cross section portion 43 ends. The web 4W and the arms 4A of the hat-shaped cross section portion 43 are formed into a planar portion 44 such that the web 4W is flush with the arms 3A (the web 4W and the arms 4A becomes coplanar).

As shown in FIGs. 1C and 1D, the web 4W of the hat-shaped cross section portion 43 of the sub-frame 4 has a width larger than the entire width of the main frame 3. The web 4W is mounted to the main frame 3 from the outside in the vehicle width direction such that the main frame 3 is contained in a recess 45 of the hat-shaped cross section portion 43. The recess 45 is defined by the web 4W and flanges 4F on the both sides of the web 4W.

That is, in the main frame 3, the web 3W is arranged inward the vehicle, the flanges 3F protrude outward the vehicle from the web 3W, and the arms 3A are arranged on both of the protruding sides (outward the vehicle) of the respective flanges 3F.

In contrast to the above, in the hat-shaped cross section portion 43 of the sub-frame 4, the web 4W is arranged outward the vehicle, the flanges 4F protrude inward the vehicle from the web 4W, and the arms 4A are arranged on both of the protruding ends (inward the vehicle) of the respective flanges 4F. This means that the direction (aspect) of the hat shape of the sub-frame 4 is opposite to the direction (aspect) of the hat shape of the main frame 3. And as shown in FIG. 1 (FIG. 1A - FIG. 1E), the main frame 3 is disposed in the recess 45 that is open toward the inside of the vehicle.

Further, at the planar portion 44 (an end of the curved portion 41 inner side of in the vehicle width direction) on the first end of the sub-frame 4, the sub-frame 4 overlaps the main frame 3 and is joined to main frame 3, and also overlaps the roof panel 1 and is joined to the roof panel 1.

Further, since the sub-frame 4 is made of thick material like the main frame 3 but having good formability (the sub-frame 4 is made of a material having the same plate thickness as the main frame 3 but the sub-frame 4 has a shape that is more formable than the main frame 3), the curved portion 41 of the sub-frame 4 has a curvature, which is larger than the curvature of the main frame 3 and also which is close to the curvature of the corner 12. Consequently, the curved portion 41 of the sub-frame 4 approaches the corner 12, and the vertical portion 42 also approaches the side face portion body 13.

As a consequence, as shown in FIG. 4A, the web 4W of the sub-frame 4 supports roof panel 1 from the inside of the vehicle interior at portions on the left and right sides (outward in the vehicle width direction) further than the planar portion 44 overlapping the main frame 3.

### 2. Actions and Effects

The high-roof structure of the truck according to this embodiment brings the following advantageous effects.
(1) Since the sub-frames 4 are additionally arranged to the main frame 3, which extends from the main portion 11 to the side face portion 14 along the vehicle width direction, the sub-frames 4 can increase the portions where the roof frame 2 follows the shape of the roof panel 1 (the sub-frames 4 can increase the portions where the roof frame 2 contacts with the roof panel 1). Consequently, the sub-frames 4 enhance the supporting stiffness of the roof frame 2, and the durability against the input load into the roof panel 1 from above is enhanced.

FIGs. 4 A and 4B show the state where load corresponding to the roof crushing test is applied to the structure of the present embodiment. FIG. 4A shows the state of the present embodiment, and FIG. 4B shows a state of a comparative example not provided with the sub-frame 4.

As shown in FIG. 4B, if the high-roof structure does not have the sub-frame 4, the roof frame 2 includes only the main frame 3. This structure makes a range that receives load on the roof upper surface a range inside the point "c1" to weaken the a portion (On the roof frame 2, a range that can receive the load acting on the roof upper surface is limited to a first range, that is inside the point "c1". As a result, the portion "a" in FIG. 4B becomes a structural weak portion). In addition, a frame landing point "b1" is a high stiffness point of the frame member 5, and is a fixed point. Consequently, a large gap of the distance "d1" is generated between the load receiving point "c1" of the roof frame 2 and the frame landing point "b1", and therefore has great disadvantage to the load.

On the other hand, the present embodiment additionally includes the sub-frames 4, which support the roof panel 1 from the inside of the vehicle interior at a range toward the left and right sides of the vehicle further than the portion where the sub-frame 4 overlaps the main frame 3. This structure receives load on the roof upper surface of the roof panel 2 only in a range inside the point "c2" (On the roof frame 2, a range that can receive the load acting on the roof upper surface is expanded into a second range, that is inside the point "c2"). Consequently, the weak portion (portion "a") of the comparative example is resolved. In addition, since the distance between the load receiving point "c2" and the frame landing point "b2" of the roof frame 2 comes to be only "d2" along the vehicle width directly, which is smaller than the distance "d1", the applied load can be sufficiently supported.

(2) The main frame 3 is formed to have a cross section in hat shape consisting of the web 3W, the flanges 3F and the arms 3A. The arms 3A of the width directional portion overlap the roof panel 1 and are joined to the roof panel 1, so that the supporting stiffness for supporting the roof panel 1 can be secured. In addition, since the arms 3A of the main frame 3 overlap and are joined to the roof panel 1, a closed cross-sectional shape, which further enhances the stiffness of the high-roof structure is formed.

(3) The sub-frames 4 each have a hat-shaped cross section portion 43 formed to have a cross section in a hat-shape consisting of the web 4W, flanges 4F and arms 4A. The main frame 3 is contained in the recess 45 formed by the web 4W and flanges 4F of the hat-shaped cross section portion 43. The sub-frame 4 overlaps the main frame 3 and is joined to the main frame 3 at the first end (the planar portion 44) of the sub-frame 4. Accordingly, even if the sub-frame 4 is added to the main frame 3, the protruding extent of the roof frame 2 toward the vehicle interior can be suppressed as much as possible. Furthermore, the size of the sub-frames 4 can be increased to further enhance the stiffness of the high-roof structure. Further, since the double closed cross-sectional shapes are formed by the main frame 3 and the sub-frame 4, the stiffness of the high-roof structure can be further enhanced.

(4) The flanges 4F of the sub-frame 4 come to be lower in height as approaching the first end. The web 4W of the sub-frame 4 comes to be flush with the arms 4A at the first end to form the planar portion 44 (Both the web 4W and the arms 4A of the sub-frame 4 becomes coplanar at the first end to form the planar portion 44). At the planar portion 44, the sub-frame 4 overlaps the main frame 3 and the roof panel 1 and is joined to the main frame 3 and the roof panel 1 (see the hatched portion in FIG. 1B), so that supporting stiffness against the roof panel 1 can be enhanced.

(5) As described above, the sub-frames 4 support the roof panel 1 from the inside of the vehicle interior in the range closer to an outer side in the vehicle width direction than portions where the sub-frames 4 overlap the main frame 3. Therefore, the durability against the input load from above the roof panel 1 is enhanced.

### 3. Miscellaneous

Although the embodiment has been described above, the configuration of the embodiment is exemplary and can be appropriately modified without departing from the scope of the present embodiment.

For example, description is made in relation to an example in which the sub-frames are added to the front left and right frame portions, but the sub-frames may be added to the rear left and right frame portions.

Further, the shapes of the sub-frames can be appropriately modified as far as the desired object is secured.

### [Reference Signs List]

1: Roof panel
11: Main portion of roof panel 1
12: Corner of roof panel 1
13: Side face portion body of roof panel 1
14: Side face portion of roof panel 1
15: Connecting portion
16: Stiffener
2: Roof frame
3: Main frame
3A: Arm of main frame 3
3F: Flange of main frame 3
3W: Web of main frame 3
31: Width directional portion of main frame 3
32: Front-rear directional portion of main frame 3
33: Curved portion of main frame 3
34: Vertical portion body of main frame 3
35: Vertical portion of main frame 3
4: Sub-frame (outer frame)
4A: Arm of sub-frame 4
4F: Flange of sub-frame 4
4W: Web of sub-frame 4
41: Curved portion of sub-frame 4
42: Vertical portion of sub-frame 4
43: Hat-shaped cross section portion of sub-frame 4
44: Planar portion of sub-frame 4
45: Recess of sub-frame 4
5: Frame member (cab body)

## Claims

1. A high-roof structure of a truck in which a roof panel of a high-roof type is mounted on a cab body having a ceiling being opened, the high-roof structure being **characterized in that**:
the roof panel comprises a main portion forming the ceiling and side face portions having corners that downward curve from the main portion to left and right sides of a vehicle, the roof panel being supported by a roof frame from an inside of a vehicle interior;
the roof frame comprises
a main frame comprising a width directional portion extending linearly in a vehicle width direction along the main portion, and vertical portions having curved portions that downward curve from the width directional portion to the left and right sides of the vehicle at a curvature smaller than a curvature of the corners and that is separated from the corners, the vertical portion having lower ends attached to the cab body, and
sub-frames being disposed between the vertical portions of the main frame and the side face portions of the roof panel and downward curving from vicinities of connecting portions between the main body and the side face portions to the left and right sides of the vehicle so as to extend toward the cab body;
the sub-frames include curved portions formed along shapes of the corners of the roof panel; and
first ends of the sub-frames are joined to the main frame in the vicinities of the connecting portions and second ends of the sub-frames are attached to the cab body.

2. The high-roof structure according to claim 1, wherein
the main frame is formed to have a hat-shaped cross section comprising a web, flanges, and arms, and
the arms of the width directional portion overlap the roof panel and are joined to the roof panel.

3. The high-roof structure according to claim 2, wherein
the sub-frames are each formed to have a hat-shaped cross section portion comprising a web, flanges, and arms,
the main frame is contained in a recess portion defined by the web and the flanges of the hat-shaped cross section portion, and
the sub-frame overlaps the main frame and is joined to the main frame at the first end.

4. The high-roof structure according to claim 3, wherein
the flanges of each of the sub-frames are formed to be lower as approaching the first end,
the web of the sub-frame is flush with the arms of the sub-frame at the first end,
the sub-frame overlaps the main frame and the roof panel and is joined to the main frame and the roof panel at a portion where the web of the sub-frame is flush with the arm of the sub-frame.

5. The high-roof structure according to claim 1, wherein
the curved portions of the sub-frames are formed to have larger curvatures than curvatures of the curved portions of the main frame, and
the sub-frames support the roof panel from the inside of the vehicle interior in the range closer to an outer side in the vehicle width direction than portions where the sub-frames overlap the main frame.
